Europäisches Patentamt

European Patent Office

Office européen des brevets

(19)

(11) Numéro de publication : **0 391 795 B1**

(12) **FASCICULE DE BREVET EUROPEEN**

(45) Date de publication du fascicule du brevet :
16.09.92 Bulletin 92/38

(51) Int. Cl.⁵ : **B64D 29/08**

(21) Numéro de dépôt : **90400915.6**

(22) Date de dépôt : **04.04.90**

(54) **Capotage mobile pour moteur d'avion.**

(30) Priorité : **05.04.89 FR 8904456**

(43) Date de publication de la demande :
**10.10.90 Bulletin 90/41**

(45) Mention de la délivrance du brevet :
**16.09.92 Bulletin 92/38**

(84) Etats contractants désignés :
**BE DE ES FR GB GR IT SE**

(56) Documents cités :
**EP-A- 0 055 163**
**US-A- 2 421 689**
**US-A- 4 679 750**

(73) Titulaire : **HISPANO-SUIZA Société anonyme dite:**
**333, Bureaux de la Colline**
**F-92213 Saint Cloud (FR)**

(72) Inventeur : **Hersen, René, Marie, Joseph**
**2 Rue Flora Tristen**
**F-77380 Combs La Ville (FR)**
Inventeur : **Soulier, Pascal, Marie, Paul, Marcel**
**45 Rue Lesueur**
**F-76600 Le Havre (FR)**

(74) Mandataire : **Moinat, François et al**
**S.N.E.C.M.A. Service des Brevets Boîte Postale 81**
**F-91003 Evry Cédex (FR)**

## Description

La présente invention concerne un capotage mobile pour groupe propulseur d'avion selon la preambule de la revendication 1.

Il est courant dans la construction des avions de relier le groupe propulseur ou moteur à la cellule de l'avion par un mât ou autre structure similaire de support, que le moteur soit monté à l'arrière du fuselage ou sous l'aile de l'avion. Dans ces applications, le moteur est associé à une nacelle formant carénage qui a une fonction de protection, permet de réaliser une surface externe de profil aérodynamique à trainée minimale et est éventuellement utilisée pour former une canalisation de circulation d'air. La nacelle comporte notamment vers l'arrière un capotage mobile dont le déplacement permet l'accès à différentes parties du moteur, facilitant ainsi notamment les opérations de maintenance.

Un tel capotage intégré à une nacelle est par exemple décrit par US-A-4 549 708 où ledit capotage s'ouvre en deux parties par pivotement autour de charnières.

Par rapport aux solutions connues, le but de l'invention est d'améliorer l'accessibilité grâce à un dégagement total du capot, d'éviter l'utilisation de moyens d'assistance tant à l'ouverture qu'à la fermeture et qu'ils soient de nature, mécanique, hydraulique ou pneumatique, ces moyens étant pénalisant du double point de vue de la masse et des encombrements et pouvant être à l'origine de dysfonctionnements.

Par ailleurs, il est également connu d'associer à un système d'inversion de poussée de turboréacteur un carénage mobile, notamment en translation. EP-A-0 055 163 par exemple, décrit un dispositif de guidage à rail adapté pour ce genre d'application. Un but de l'invention est toutefois d'obtenir un capot mobile dissocié de l'inverseur de poussée.

Un capotage mobile en forme de C selon la preambule de la revendication 1, associé à un carénage fixe et répondant à ces conditions est caractérisé en ce que, ledit capotage est relié à un dispositif de coulissement fixé sur le moteur et permettant un déplacement dudit capotage sensiblement parallèle à l'axe longitudinal du moteur et en ce que sur chaque bord du C ledit capotage comporte des éléments de verrouillage coopérant avec des éléments de verrou supportés par une biellette de liaison fixée sur ledit carénage fixe.

Avantageusement, le dispositif de verrouillage constitué par des éléments de verrouillage et des éléments de verrou et situé dans un plan transversal par rapport au moteur comporte, d'un côté du C, un pion coopérant avec une douille et de l'autre côté du C, un crochet coopérant avec un anneau. En outre, le dispositif de coulissement avantageusement disposé du côté opposé au carénage fixe, comporte une poutre télescopique de section polygonale solidaire dudit capotage, reliée à des points de fixation sur le moteur et coopérant avec des glissières situées aux sommets dudit polygone et solidaires du moteur.

D'autres caractéristiques et avantages de l'invention seront mieux compris à la lecture de la description qui va suivre d'un mode de réalisation de l'invention, en référence aux dessins annexés sur lesquels :

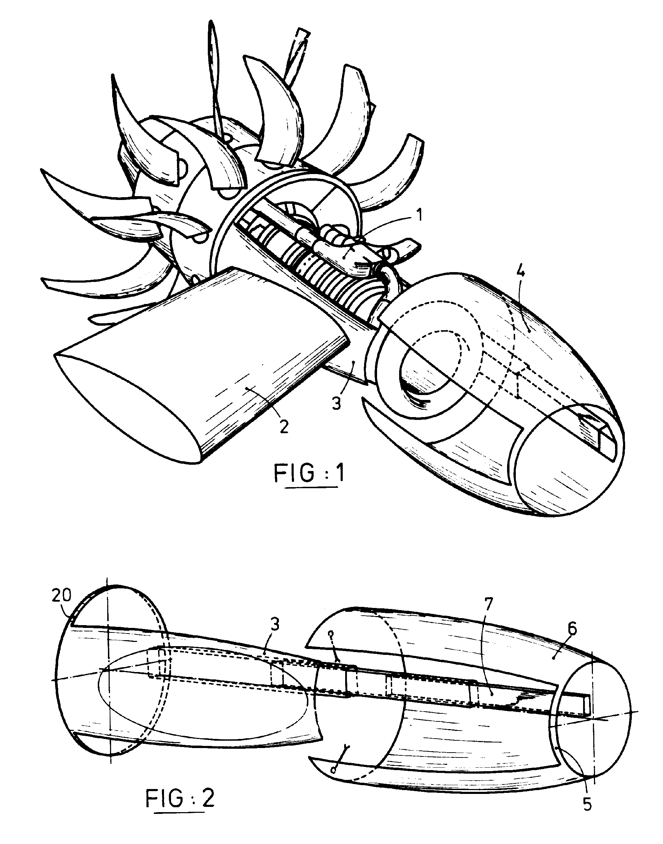

– la figure 1 représente, selon une vue schématique en perspective, un moteur d'avion, constitué à titre d'exemple par un turboréacteur à hélices rapides arrière fixé latéralement sur un mât d'avion et équipé d'un capotage mobile conforme à l'invention, montré dans une position déployée vers l'avant ;

– la figure 2 montre un détail agrandi du capotage représenté sur la figure 1 ;

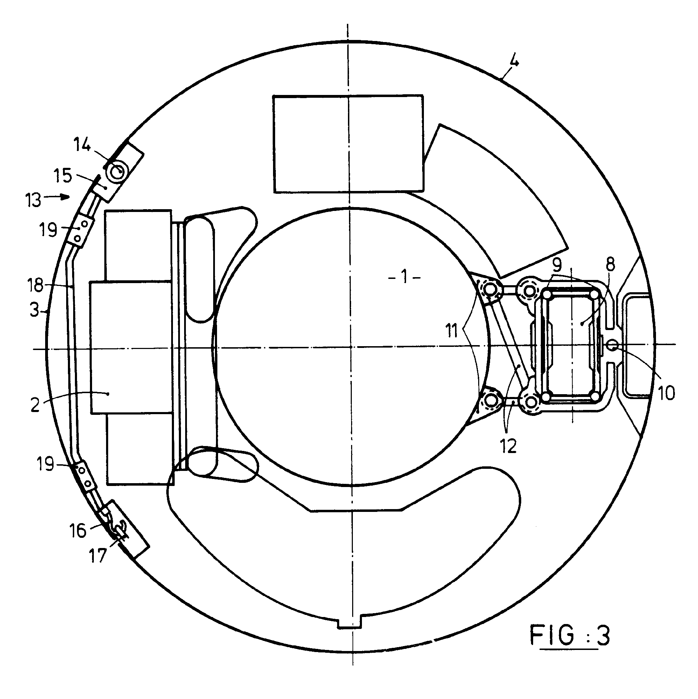

– la figure 3 représente, selon une vue en coupe par un plan transversal perpendiculaire à l'axe du moteur au niveau du plan de jonction du capotage fermé avec l'enveloppe fixe du moteur, le capotage mobile représent sur les figures 1 et 2 et ses liaisons au moteur et au carénage fixe qui lui est associé.

A titre d'exemple d'application d'un capotage mobile conforme à l'invention, on a représenté sur la figure 1 un moteur d'avion 1 du type turboréacteur à hélices rapides arrière. Dans l'exemple représenté, ledit moteur 1 est supporté latéralement par un mât 2 de liaison à la cellule de l'avion. Au niveau dudit mât 2, le moteur 1 est enveloppé par un carénage fixe 3 entourant le mât 2. Le reste de l'enveloppe correspondante du moteur 1 est constitué par un capotage mobile 4, représenté sur la figure 1 en position déployée. Comme représenté également plus en détails sur la figure 2, ledit capotage mobile 4, réalisé conformément à l'invention, comporte une structure annulaire 5 à son extrémité libre qui est prolongée, du côté du moteur 1, par une structure 6 de section en forme de C. Sur la face interne dudit capotage mobile 4, opposée à l'ouverture du C, est disposé un système de coulissement 7 permettant le déplacement dudit capotage 4 sensiblement parallèle à l'axe longitudinal du moteur 1. Comme cela est visible sur la figure 1, ce déplacement du capotage mobile 4 par coulissement longitudinal permet un dégagement total du capotage et offre une grande accessibilité pour des interventions, notamment en maintenance, sur le moteur 1 ou ses accessoires. Comme représenté plus en détails sur la figure 3, ledit système de coulissement 7 se compose d'une poutre télescopique 8 à section polygonale, coopérant avec des glissières 9 situées aux sommets dudit polygone. On a représenté en 10 le rail secondaire de reprise d'efforts en liaison avec ledit système de coulissement 7. Le moteur 1 comporte des moyens de fixation telles que des chapes 11 qui sont reliées par des biellettes 12 au système de coulissement 7. Le glissement de la poutre 8 peut être facilité en interposant un matériau à faible coefficient de frottement tel que PTFE entre les éléments en contact aux sommets de la poutre 8. Les efforts dus au poids du capotage 4 en position déployée et à la force du vent sont transmis par la poutre 8 et les biellettes de liaison 12 aux points de fixation 11 sur le moteur 1. Le déplacement du capotage mobile se fait horizontalement ou selon une faible inclinaison sur l'horizontale comprise généralement entre plus ou moins 5 degrés et le déplacement doit également dans les conditions normales se faire perpendiculairement au vent. Il s'ensuit que le système de coulissement 7 qui vient d'être décrit ne nécessite, tant à l'ouverture qu'à la fermeture du capotage mobile 4, aucun moyen d'assitance qu'il soit de nature mécanique, hydraulique ou pneumatique.

Ledit capotage mobile 4 est en outre associé conformément à l'invention à un système de verrouillage 13, schématiquement représenté sur la figure 3. Sur le bord supérieur du capotage mobile 4, à la limite du C, du côté du moteur 1, en fin de course de fermeture dudit capotage mobile 4, des verrous disposés, d'une part, sur le carénage fixe 3 et d'autre part, sur le capotage 4 et constitués d'un pion 14 et d'une douille 15 s'engagent mutuellement l'un dans l'autre en position de blocage. De manière similaire, sur le bord inférieur du capotage mobile 4, à la limite du C, du côté du moteur 1, des verrous constitués d'un crochet 16 et d'un anneau coopérant 17 ou d'un moyen équivalent tel qu'un axe et son logement, s'engagent également pour le blocage. Une biellette 18, dont les fixations au carénage fixe 3 sont représentées en 19, relie entre eux les ensembles de verrous situés de part et d'autre et les supporte. Ledit système de verrouillage 13 assure le verrouillage entre le capotage mobile 4 et le carénage fixe 3 à la fois dans le sens axial et dans le sens radial. Ce système assure une précharge sur la structure du capotage 4 et l'ensemble étant situé dans un même plan transversal par rapport à l'axe longitudinal du moteur, les efforts de précharge et les efforts dus à la pression interne sont repris par la biellette 18 de liaison.

Dans une application de l'invention différente de celle qui vient d'être décrite en référence aux figures 1 à 3 qui peut être faite à un autre type de moteur d'avion, turbosoufflante ou turbopropulseur ou turbomoteur à hélices rapides disposées différemment, des variantes de réalisation peuvent être apportées à l'invention. Notamment, dans le cas d'un moteur suspendu sous un mât vertical ou soutenu par un mât inférieur vertical, deux rails de section adaptée, disposés le long du mât et parallèlement à l'axe longitudinal du moteur peuvent être utilisés pour assurer le coulissement du capotage mobile conforme à l'invention.

En plus des avantages de l'invention précédemment relevés, on notera encore la meilleure sécurité obtenue du fait d'un nombre réduit d'éléments d'articulation ou de verrouillage, éventuellement susceptibles d'une rupture en vol ainsi qu'une meilleure répartition des contraintes dans la structure évitant l'apparition de zones de concentration de contraintes au voisinage des articulations ou des verrous. On observe également que le système de coulissement 7 du capotage mobile 4 est soumis à des charges faibles en vol du fait que ledit capotage mobile 4 du côté moteur s'appuie sur des structures fixes avoisinantes telles que l'anneau fixe 20 de raccordement à l'enveloppe du moteur 1, visible sur la figure 2 notamment.

## Revendications

1. Capotage mobile pour un groupe propulseur ou moteur d'avion tel qu'un turboréacteur à hélices rapides enveloppant une partie dudit moteur (1) en association avec une partie de carénage fixe (3) qui coopère avec un mât (2) de fixation sur la cellule de l'avion et comportant à son extrémité libre une structure annulaire (5) de faible largeur, prolongée du côté moteur sur la majeure partie dudit capotage par une structure de section en forme de C (6) dont les limites se raccordent audit carénage fixe (3) caractérisé en ce que, ledit capotage (4) est relié à un dispositif de coulissement (7) fixé sur le moteur (1) et permettant un déplacement dudit capotage sensiblement parallèle à l'axe longitudinal du moteur (1) et en ce que sur chaque bord du C ledit capotage (4) comporte des éléments de verrouillage (14, 17) coopérant avec des éléments de verrou (15, 16) supportés par une biellette de liaison (18) fixée sur ledit carénage fixe (3).

2. Capotage mobile selon la revendication 1 dans lequel le dispositif de verrouillage (13) constitué par des éléments de verrouillage et des éléments de verrou comporte, d'un côté du C, un pion (14) coopérant avec une douille (15) et de l'autre côté du C, un crochet (16) coopérant avec un anneau (17), de manière à assurer la reprise des efforts axiaux et radiaux et à ce que les efforts de précharge exercés sur la structure du capotage et les efforts de pression interne soient repris par ladite biellette de liaison (18), l'ensemble du système de verrouillage (13) étant situé dans un même plan transversal par rapport au moteur (1).

3. Capotage mobile selon l'une des revendications 1 ou 2 dans lequel ledit dispositif de coulissement (7) est disposé du côté opposé audit carénage fixe (3) et comporte une poutre télescopique (8) de section polygonale solidaire dudit capotage (4), reliée à des points de fixation (11) situés sur le moteur (1) et coopérant avec des glissières (9) situées aux sommets dudit polygone et solidaires du moteur (1).

**Patentansprüche**

1.  Bewegliche Verkleidung für ein Flugzeugtriebwerk bzw. einen Flugzeugmotor wie ein TL-Triebwerk mit Schnellaufschrauben, die einen Teil des genannten Triebwerks (1) in Verbindung mit einem Teil einer mit einer Strebe (2) zur Befestigung an der Zelle des Flugzeugs zusammenwirkenden unbeweglichen Ausrundung (3) ummantelt und an ihrem freien Ende eine ringförmige Gestalt (5) von geringer Breite aufweist, die sich zum Triebwerk hin über den größten Teil der genannten Verkleidung in einer konstruktion mit C-förmigem Querschnitt (6) fortsetzt, deren Grenzen sich an genannte unbewegliche Ausrundung (3) anschließen,

    dadurch gekennzeichnet,

    daß die genannte Verkleidung (4) mit einer Gleitvorrichtung (7) verbunden ist, die am Triebwerk (1) befestigt ist und ein Verschieben der genannten Verkleidung etwa parallel zur Längsachse des Triebwerks (1) ermöglicht,

    und daß die genannte Verkleidung (4) an jedem Rand des C Verriegelungselemente (14, 17) aufweist, die mit Riegelelementen (15, 16) zusammenwirken, die von einer an genannter unbeweglicher Ausrundung (3) befestigten Verbindungsstange (18) gehalten werden.

2.  Bewegliche Verkleidung nach Anspruch 1, wobei die Verriegelungsvorrichtung (13), die von Verriegelungselementen und Riegelelementen gebildet wird, auf einer Seite des C ein Metallstück (14) aufweist, das mit einer Buchse (15) zusammenwirkt, und auf der anderen Seite des C einen Haken (16), der mit einem Ring (17) zusammenwirkt, dergestalt daß die Aufnahme der axialen und radialen Beanspruchung gewährleistet wird und daß die auf die konstruktion der Verkleidung ausgeübten Vorbelastungskräfte und die aufgrund des Innendrucks entstehenden Kräfte von der genannten Verbindungsstange (18) aufgenommen werden, da die Vorrichtung in der gleichen Ebene quer zum Triebwerk (1) liegt.

3.  Bewegliche Verkleidung nach einem der Ansprüche 1 oder 2, wobei das genannte Gleitsystem (7) auf der der unbeweglichen Ausrundung (3) gegenüberliegenden Seite angeordnet ist und aus einem Teleskopträger (8) mit polygonalem Querschnitt besteht, der mit genannter Verkleidung (4) fest verbunden ist, mit Befestigungspunkten (11) verbunden ist, die sich am Triebwerk (1) befinden, und mit Schienen (9) zusammenwirkt, die sich an den Spitzen des genannten Polygons befinden und mit dem Triebwerk (1) fest verbunden sind.

**Claims**

1.  Movable cowling for an aircraft propulsion unit or engine such as a turbo jet with high-speed propellers enveloping a part of the said engine (1) in association with a fixed fairing part (3) which interacts with a pylon (2) for fixing onto the fuselage of the aircraft and comprising at its free end an annular structure (5) of narrow width, extended on the engine side over the major part of the said cowling by a structure having a C-shaped cross-section (6) whose edges are connected to the said fixed fairing (3) characterised in that, the said cowling (4) is linked to a slider device (7) fixed onto the engine (1) and permitting displacement of the said cowling substantially parallel to the longitudinal axis of the engine (1) and in that on each edge of the C the said cowling (4) comprises locking elements (14, 17) interacting with lock elements (15, 16) supported by a link rod (18) fixed onto the said fixed fairing (3).

2.  Movable cowling according to Claim 1 in which the locking device (13) constituted by locking elements and lock elements comprises, on one side of the C, a pin (14) interacting with a socket (15) and on the other side of the C, a hook (16) interacting with a ring (17) in such a way as to provide for the axial and radial forces to be taken up and for the pre-load forces exerted on the structure of the cowling and the internal pressure forces to be taken up by the said link rod (18), the whole of the locking system (13) being situated in the same transverse plane with respect to the engine (1).

3.  Movable cowling according to one of Claims 1 or 2 in which the said slider device (7) is arranged on the side opposite the said fixed fairing (3) and comprises a telescopic beam (8) of polygonal cross-section integral with the said cowling (4), which is linked to fixing points (11) situated on the engine (1) and interacting with sliders (9) situated at the vertices of the said polygon and integral with the engine (1).

FIG : 1

FIG : 2

FIG : 3